# EUROPEAN PATENT APPLICATION

(11) **EP 4 675 542 A1**
(43) Date of publication of application: **07.01.2026**
(21) Application number: 24780548.4
(22) Date of filing: 27.03.2024
(51) Int. Cl.: G06Q 50/06

(54) **INFORMATION PROCESSING DEVICE, INFORMATION PROCESSING METHOD, AND PROGRAM**

(30) Priority: 29.03.2023 JP 2023052677
(71) Applicant: Sustech Inc., Tokyo 105-0014 (JP)
(72) Inventor: TANNO, Yusuke, Tokyo 105-0014 (JP); OHASHI, Akifumi, Tokyo 105-0014 (JP)
(74) Representative: RGTH
(86) International application number: PCT/JP2024/012468
(87) International publication number: WO 2024/204447

(57) **Abstract**

The purpose of the present invention is to improve profitability in the electricity market by utilizing a predicted power generation range of a power generation facility, said predicted power generation range changing according to changes in weather. A server 1 is provided with a weather forecast acquisition unit 411, a power generation record acquisition unit 412, a power generation capacity acquisition unit 413, a power generation prediction calculation unit 421, and a unit 46 for determining power generation and sales plans and the like. The weather forecast acquisition unit 411 acquires weather forecast data. The power generation record acquisition unit 412 acquires power generation records of a power generation facility. The power generation capacity acquisition unit 413 acquires the power generation capacity and installation location of the power generation facility. The power generation prediction calculation unit 421 calculates predicted power generation values and a predicted minimum power generation value for renewable energy on the basis of at least the latest weather forecast data and the power generation records, the power generation capacity, and the installation location of the power generation facility. The unit 46 for determining power generation and sales plans and the like determines a power generation plan for the power generation facility and bidding conditions for selling and purchasing electricity, on the basis of the calculated predicted power generation values and predicted minimum power generation value.

## Description

### TECHNICAL FIELD

The present invention relates to an information processing device, an information processing method, and a program.

### BACKGROUND ART

Conventionally, there is a technology related to a system that supports the consideration of transactions in the electricity market with data including market prices of electricity and weather forecast data (for example, see Patent Document 1).

### Citation List

### Patent Document

Patent Document 1: Japanese Unexamined Patent Application, Publication No. 2007-4646

### DISCLOSURE OF THE INVENTION

### Problems to be Solved by the Invention

In recent years, improvement in how to display power generation prediction information and the like as information provided to a user for determining bidding conditions in the consideration of transactions in the electricity market has been required. However, such a requirement has not been met sufficiently.

The present invention has been made in view of such circumstances, and an object of the present invention is to improve profitability in power transactions by utilizing a predicted power generation range of a power generation facility that changes according to changes in weather.

### Means for Solving the Problems

To achieve the above object, an information processing device according to one aspect of the present invention includes:
a weather forecast acquisition unit that acquires weather forecast data;
a power generation record acquisition unit that acquires a power generation record of a power generation facility;
a power generation capacity acquisition unit that acquires a power generation capacity and an installation location of the power generation facility;
a power generation prediction calculation unit that calculates a predicted power generation value and a predicted minimum power generation value for renewable energy based on at least latest weather forecast data and the power generation record,
the power generation capacity, and the installation location of the power generation facility; and
a power generation plan determination unit that determines a power generation plan for the power generation facility and
bidding conditions for selling and purchasing power based on the calculated predicted power generation value and the calculated predicted minimum power generation value. An information processing method and a program corresponding to the information processing device according to one aspect of the present invention are also provided as an information processing method and a program according to one aspect of the present invention.

### Effects of the Invention

According to the present invention, it is possible to improve profitability in the electricity market by utilizing a predicted power generation range of a power generation facility that changes according to changes in weather.

### BRIEF DESCRIPTION OF THE DRAWINGS

FIG. 1 shows a configuration of an information processing system including a server of an embodiment of an information processing device according to the present invention;
FIG. 2 is a block diagram showing an example of a hardware configuration of the server in the information processing system shown in FIG. 1;
FIG. 3 is a functional block diagram showing an example of a functional configuration of the server having the hardware configuration shown in FIG. 2;
FIG. 4 is a flowchart illustrating an example of an operation of the server having the functional configuration of FIG. 3;
FIG. 5 shows a table of predicted power generation amount prediction results for a certain day, which are predicted by the server of FIGS. 2 and 3 when power generated in a predetermined solar power plant is sold to the power transaction market;
FIG. 6 is a graph showing numerical values of the table of FIG. 5 as polygonal lines;
FIG. 7 is a table showing an example of power generation amount prediction results for a certain day predicted by the server of FIGS. 2 and 3 when power generated in a predetermined solar power plant is supplied under a bilateral wholesale contract;
FIG. 8 is a graph showing numerical values of the table of FIG. 7 as polygonal lines; and
FIG. 9 shows an example of risk tolerances for determining a submission policy.

### PREFERRED MODE FOR CARRYING OUT THE INVENTION

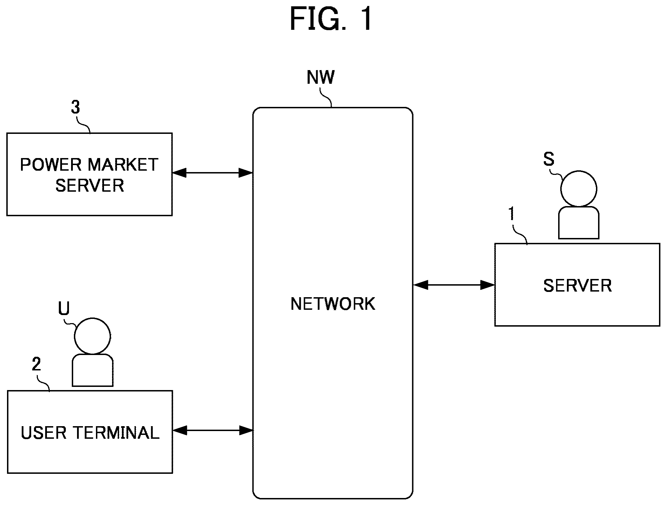

Hereinafter, an embodiment of the present invention will be described with reference to the drawings. FIG. 1 shows a configuration of an information processing system including a server of an embodiment of an information processing device according to the present invention.

The information processing system shown in FIG. 1 includes a server 1 managed by a provider of the present service, a user terminal 2 operated by a user, and an electricity market server 3. The server 1, the user terminal 2, and the electricity market server 3 are communicably connected to each other via a network NW. The form of the network NW is not particularly limited, and for example, Bluetooth (registered trademark), Wi-Fi, a LAN (Local Area Network), the Internet, or the like can be employed.

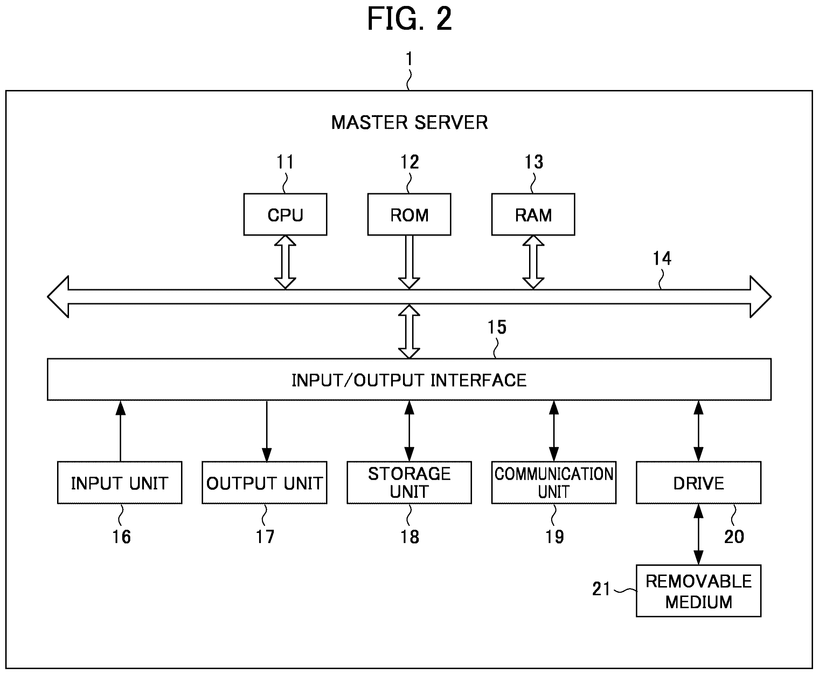

FIG. 2 is a block diagram showing an example of a hardware configuration of the server in the information processing system shown in FIG. 1. The server 1 includes a CPU (Central Processing Unit) 11, a ROM (Read Only Memory) 12, a RAM (Random Access Memory) 13, a bus 14, an input/output interface 15, an input unit 16, an output unit 17, a storage unit 18, a communication unit 19, and a drive 20.

The CPU 11 executes various processes according to a program recorded in the ROM 12 or a program loaded from the storage unit 18 to the RAM 13.

The RAM 13 also stores data and the like necessary for the CPU 11 to execute various processes as appropriate.

The CPU 11, the ROM 12, and the RAM 13 are connected to each other via the bus 14. The input/output interface 15 is also connected to the bus 14. The input unit 16, the output unit 17, the storage unit 18, the communication unit 19, and the drive 20 are connected to the input/output interface 15.

The input unit 16 includes various buttons and the like, and allows input of various information according to an instruction operation by the user. The output unit 17 includes a display, a speaker, and the like, and outputs images and sounds. The storage unit 18 includes a hard disk, DRAM (Dynamic Random Access Memory), or the like, and stores various data such as map information to be described later. The communication unit 19 controls communication with another device (e.g., the user terminal 2).

A removable medium 21 such as a magnetic disk, an optical disk, a magneto-optical disk, or a semiconductor memory is mounted on the drive 20 as appropriate. The program read from the removable medium 21 by the drive 20 is installed in the storage unit 18 as necessary. The removable medium 21 can also store various data such as map information stored in the storage unit 18 in the same manner as the storage unit 18. Since the hardware configurations of the user terminal 2 and the electricity market server 3 can be basically the same as the hardware configuration of the server 1, the descriptions thereof will be omitted here.

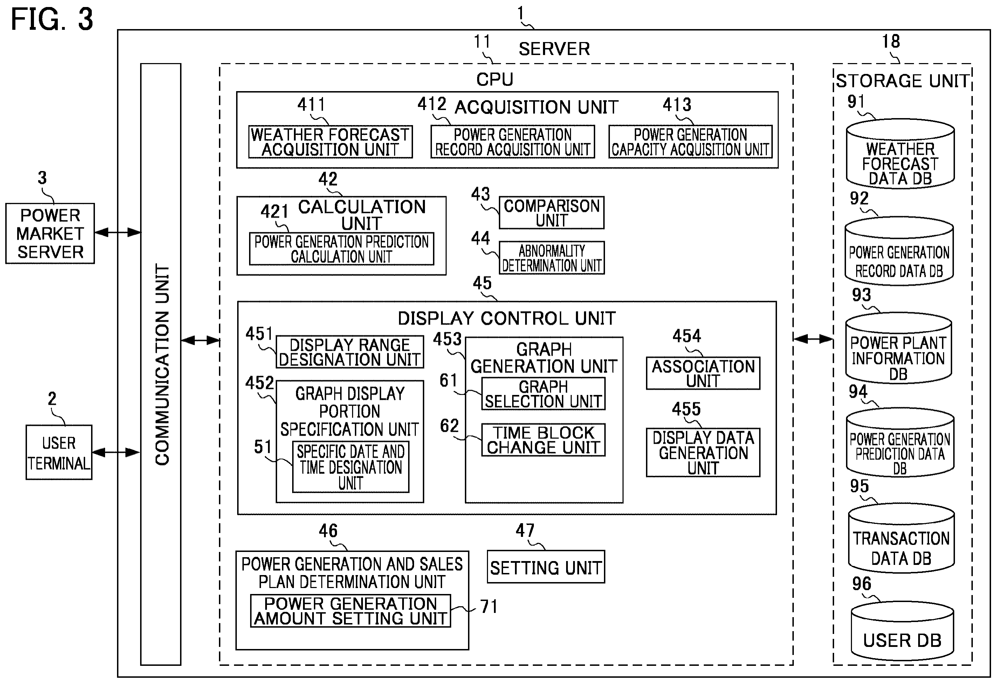

FIG. 3 is a functional block diagram showing an example of a functional configuration of the server 1 of FIG. 2. As shown in FIG. 3, in the CPU 11 of the server 1, an acquisition unit 41 that acquires data serving as premise information for formulating a power generation plan, a calculation unit 42 that calculates a power generation prediction, a comparison unit 43 that compares a predicted power generation value with a record or the like, an abnormality determination unit 44, a display control unit 45, a power generation and sales plan determination unit 46, and a setting unit 47 function.

One area of the storage unit 18 in the server 1 is provided with a weather forecast data database (DB) 91, a power generation record data DB 92, a power plant information DB 93, a power generation prediction data DB 94, a transaction data DB 95, and a user information DB 96. The weather forecast data DB 91 stores weather forecast data and the like for each specific time period at a specific location. Specifically, for example, weather, temperature, cloud volume, wind direction, wind speed, amount of solar radiation, and the like may be stored. The power generation record data DB 92 stores data on power generation record for each specific power plant and for each specific time period. Specifically, for example, the DC power generation amount, the AC power generation amount, the presence or absence of output suppression, and the presence or absence of failure of various devices, and operation status information may be stored. The power plant information DB 93 stores information relating to the power generation facility of each specific power plant. Specifically, for example, in addition to the address, the latitude, the longitude, the altitude, and the like of the location of the power plant, information such as the DC capacity, the AC capacity, the number of Power Conditioning Systems (PCSs), the PCS manufacturer, the operation start timing, and the like of the power plant may be stored. The power generation prediction data DB 94 stores power generation prediction results for each specific power plant and for each specific time period. Specifically, for example, it is information such as a predicted power generation value, a maximum value or a minimum value of an assumed prediction error range, and a prediction error with an actual power generation record. The transaction data DB 95 stores power transaction data and the like for each specific power plant and for each specific time period. Specifically, for example, it is information such as a unit price of power purchasing and selling, a total amount of power purchasing and selling, a total amount of power purchasing and selling, a spot market price, an imbalance price, a bidding deadline or a bidding start time of a power transaction, and bidding conditions for selling and purchasing power. In addition, prediction information of a spot market price and an imbalance price for each specific time period may be included. The user information DB 96 stores user information (such as the name of the member or the user of the present service, the login information (account) to the website of the present service published by the server 1).

The acquisition unit 41 includes a weather forecast acquisition unit 411, a power generation record acquisition unit 412, and a power generation capacity acquisition unit 413.

The weather forecast acquisition unit 411 acquires weather forecast data from an external source, for example, a weather information publishing institution, and stores the weather forecast data in the weather forecast data DB 91. The weather forecast acquisition unit 411 acquires the latest weather forecast data based on at least the bidding deadline or bidding start time of the power transaction, and the time required to determine the bidding conditions for selling and purchasing power. Here, the bidding deadline is, for example, gate close in the case of an hour-ahead market, and the bidding start time is, for example, 17:00 on the previous day in the case of the hour-ahead market. Here, 17:00 on the previous day is an example, and other times may be used. In addition, it may be changed in the future.

The power generation record acquisition unit 412 acquires a power generation record from a power plant (power generation facility), and stores the power generation record in the power generation record data DB 92. The power generation record acquisition unit 412 acquires, for example, the DC power generation amount, the AC power generation amount, the presence or absence of output suppression, the presence or absence of failure of various devices, operation status information, etc. for each power plant.

The power generation capacity acquisition unit 413 acquires information such as a power generation capacity and an installation location from a power plant (power generation facility), and stores the information in the power plant information DB 93. The power generation capacity of the power generation facility is, for example, in the case of a solar power plant or the like, performance such as a design capacity or a degree of deterioration of a solar panel, for example. The installation location is, for example, position information such as latitude, longitude, and altitude for specifying a position on the earth.

The calculation unit 42 calculates the predicted minimum power generation value based on the prediction accuracy (including data used by the power generation prediction calculation unit 421 below, in addition to using at least the prediction accuracy) set by the setting unit 47. The calculation unit 42 includes a power generation prediction calculation unit 421. The power generation prediction calculation unit 421 calculates the predicted power generation value and the predicted minimum power generation value for renewable energy based on at least the latest weather forecast data and the power generation record, the power generation capacity, and the installation location of the power generation facility, which are acquired by the acquisition unit. The renewable energy is, for example, power generated by solar power generation. In addition, geothermal, wind, hydro, and tidal power generation are also included in renewable energy. The power generation prediction calculation unit 421 further calculates a predicted power generation range defined by the predicted minimum power generation value and the predicted maximum power generation value. The predicted power generation range refers to, for example, an interval that is reliable as a prediction. Information such as the predicted power generation range, defined by the predicted power generation value, the predicted minimum power generation value, and the predicted maximum power generation value for renewable energy calculated by the power generation prediction calculation unit 421 is stored in the power generation prediction data DB 94 as needed.

The comparison unit 43 compares the predicted power generation value calculated by the power generation prediction calculation unit 421 or stored in the power generation prediction data DB 94 with the power generation record stored in the power generation record data DB 92. The power generation record is record data including the amount of power actually generated at the power plant over the past several years, as well as the date, weather, and so on. In addition, the power generation record includes data such as a deviation between the predicted value of the power generation amount and the actual power generation amount on a day in the past and a prediction accuracy obtained from these.

The abnormality determination unit 44 determines the presence or absence of an abnormality in the solar power plant based on the comparison results of the comparison unit 43.

The display control unit 45 includes a display range designation unit 451, a graph display portion specification unit 452, a graph generation unit 453, an association unit 454, and a display data generation unit 455.

The display range designation unit 451 designates the display range of the graph by one or more of the unit times (for example, six time blocks from 12:00 to 15:00). The display range designation unit 451 receives an operation for changing the display range of the graph.

The graph display portion specification unit 452 specifies, as a graph display portion, a portion including the predicted power generation value and the predicted minimum power generation value associated with each of the designated one or more unit times in the graph. When the display range designation unit 451 receives an operation for changing the display range of the graph, the graph display portion specification unit 452 changes the graph display portion in conjunction with the operation for changing the display range of the graph, and the display data generation unit 455 generates data for displaying the changed graph display portion as display data. Specifically, for example, a slide bar or the like for making the calculation date and time variable is arranged on the screen, the calculation date and time are changed in conjunction with the slide bar display by making the slide bar variable by the operation by the user, and the graph indicating the temporal changes in the predicted power generation value and the predicted power generation range is also changed in conjunction with the change in the calculation date and time.

The graph display portion specification unit 452 includes a specific date and time designation unit 51. The specific date and time designation unit 51 designates a specific date and time or a specific prediction interval. Specifically, the designation of a specific date and time or a specific prediction interval is performed by an operation using the slide bar, but the designation may be performed by direct key input in an input field or an input frame.

The graph generation unit 453 generates a graph indicating the temporal changes in the predicted power generation value and the predicted minimum power generation value calculated by the power generation prediction calculation unit 421 or stored in the power generation prediction data DB 94. The graph generation unit 453 generates a continuous curve indicating the temporal change in at least one of the predicted power generation value, the predicted maximum power generation value, the predicted minimum power generation value, or the power generation record value. In addition to the predicted power generation value and the predicted minimum power generation value, the graph generation unit 453 reads the power generation record value stored in the power generation record data DB 92 and further generates a graph indicating the temporal change in the power generation record value.

The graph generation unit 453 includes a graph selection unit 61 and a time block change unit 62. The graph selection unit 61 receives selection of a step shape, a continuous line shape, or a scatter shape as a locus of the graph. The time block change unit 62 changes a time unit (e.g., 30 minutes) indicating a temporal change in the graph according to a predetermined bid unit (power selling in a spot market, wholesale supply to a retail electricity supplier, or the like).

The association unit 454 associates the unit time in which the predicted power generation value and the predicted minimum power generation value are calculated (e.g., 10:00 to 10:30, etc., with each 30-minute unit being one time block) with the calculated predicted power generation value and the calculated predicted minimum power generation value.

The display data generation unit 455 generates display data for displaying the graph generated by the graph generation unit 453. The display data generation unit 455 generates data for displaying a graph display portion as display data. The display data generation unit 455 generates display data for displaying at least one of the predicted power generation value, the predicted minimum power generation value, or the power generation record value in the specific date and time or the specific prediction interval designated by the display range designation unit 451 so as to be superimposed on the graph.

The power generation and sales plan determination unit 46 determines a power generation plan (e.g., timing and amount of power generation) of the power generation facility and bidding conditions for selling and purchasing power based on the predicted power generation value and the predicted minimum power generation value calculated by the power generation prediction calculation unit 421. Note that, as for the bidding policy for determining the bidding conditions, for example, by arranging radio buttons provided with pairs of check boxes and items such as "maximizing the bid volume (using the intermediate value between the upper limit value of the predicted power generation range and the predicted power generation value)", "minimizing excess and deficiency imbalance (using the predicted power generation value)", "reducing the risk of deficiency imbalance (using the intermediate value between the predicted power generation value and the lower limit value of the predicted power generation range)", and "minimizing the risk of deficiency imbalance (using the lower limit value of the predicted power generation range)" on the screen according to the risk tolerance of each user, the user can designate the bidding policy simply by performing an operation of checking a check box of a desired radio button. A specific "value" or the like may be designated with a mouse. The bidding conditions are, for example, the price and quantity of power sold or purchased, and the parties to which the power is to be sold or purchased. In the case of determining the bidding conditions, for example, the bidding conditions may be determined sequentially and fully automatically without the need for a person to make a determination, or assistance for determining the bidding conditions manually (assistance for providing information serving as a determination material for a person to make a determination, or the like) may be performed. By fully automatic determination, man-hours can be reduced. In addition, bidding precision can be improved. Furthermore, by displaying the predicted power generation range for determining the bidding conditions, for example, a bidding policy for maximizing profitability can be considered. Moreover, the display/analysis function of the predicted power generation range can contribute to an improvement in the precision of power generation prediction. The bidding conditions for selling and purchasing power are, for example, bid time, bid price, bid volume, and so on. The power generation and sales plan determination unit 46 determines a power generation plan for the power generation facility and bidding conditions for selling and purchasing power based not only on the prediction accuracy, but also on the imbalance fee, the market price, and the predicted price data stored in the transaction data DB 95, in addition to the predicted power generation value and the predicted minimum power generation value calculated by the power generation prediction calculation unit 421. The power generation and sales plan determination unit 46 determines a power generation plan for the power generation facility and bidding conditions for selling and purchasing power based on the predicted power generation value and the predicted power generation range calculated by the power generation prediction calculation unit 421. The power generation and sales plan determination unit 46 adopts, as the designation of the bidding policy by the user, a designation selected by the user from among the designation to be applied to a plurality of determinations and the designation to be applied to an individual determination, and determines the power generation plan for the power generation facility and the bidding conditions for selling and purchasing power based on the bidding policy according to the designation adopted. Note that the bidding policy can be designated to apply to a plurality of determinations (e.g., as a default policy) or to an individual determination (e.g., only once).

The power generation and sales plan determination unit 46 includes a power generation amount setting unit 71. The power generation amount setting unit 71 determines a power generation plan for the power generation facility and bidding conditions for selling and purchasing power based on the set power generation amount, and sets, when a position of the displayed graph is designated by a click operation with a mouse or the like, for example, the set power generation amount based on the position.

The setting unit 47 sets a threshold related to the prediction accuracy of power generation. The prediction accuracy of power generation means the size of the predicted power generation range with respect to the predicted power generation value calculated by the power generation prediction calculation unit 421. For example, in the case of a solar power plant, the predicted power generation range becomes small during the day of a sunny day where there is no cloud, and the prediction accuracy of power generation becomes high. On the other hand, on a rainy day or a day with a large amount of clouds, the predicted power generation range becomes large, and the prediction accuracy of power generation becomes low. The threshold related to the prediction accuracy of power generation set by the setting unit 47 is set according to the risk tolerance of each user, and for example, when exceeding the threshold (the size of the predicted power generation range is large), the predicted minimum power generation value is adopted as a determination value of the power generation and sales plan.

As described above, according to the server 1 having the functional configuration shown in FIG. 3, it is possible to calculate the predicted power generation value and the predicted power generation range for the renewable energy of a solar power plant or the like based on weather forecast data and power generation facility information, and to determine the bid time, the bid price, the bid volume, and so on as bidding conditions for selling and purchasing power. As described above, when the predicted power generation range in the solar power plant is utilized, particularly, when the predicted power generation range in a certain time period is wider than a predetermined range, with respect to the time period, the power generation and sales plan of power generated in the solar power plant is submitted with the lower limit value of the predicted range (predicted minimum power generation value). Thus, for example, a power generation plan for the solar power plant and the bidding conditions for selling and purchasing power can be determined fully automatically in order to maximize profitability.

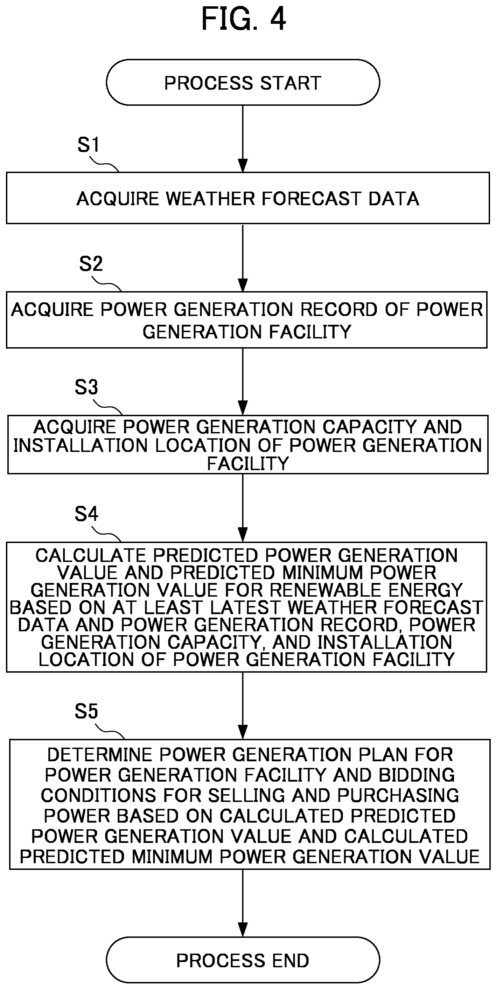

With reference to FIG. 4, the operation of the server having the functional configuration of FIG. 3 will be described. FIG. 4 is a flowchart illustrating an example of an operation of the server having the functional configuration of FIG. 3.

In step S1, the weather forecast acquisition unit 411 acquires weather forecast data. In step S2, the power generation record acquisition unit 412 acquires a power generation record of a power generation facility. In step S3, the power generation capacity acquisition unit 413 acquires the power generation capacity and the installation location of the power generation facility. In step S4, the power generation prediction calculation unit 421 calculates a predicted power generation value and a predicted minimum power generation value for renewable energy based on at least the latest weather forecast data and the power generation record, the power generation capacity, and the installation location of the power generation facility. In step S5, the power generation and sales plan determination unit 46 determines a power generation plan for the power generation facility and bidding conditions for selling and purchasing power based on the calculated predicted power generation value and predicted minimum power generation value.

As described above, according to the operation of the server 1, it is possible to fully automatically determine the power generation plan for the power generation facility and the bidding conditions for selling and purchasing power so as to maximize the profitability, for example, by utilizing the predicted power generation range in the solar power plant.

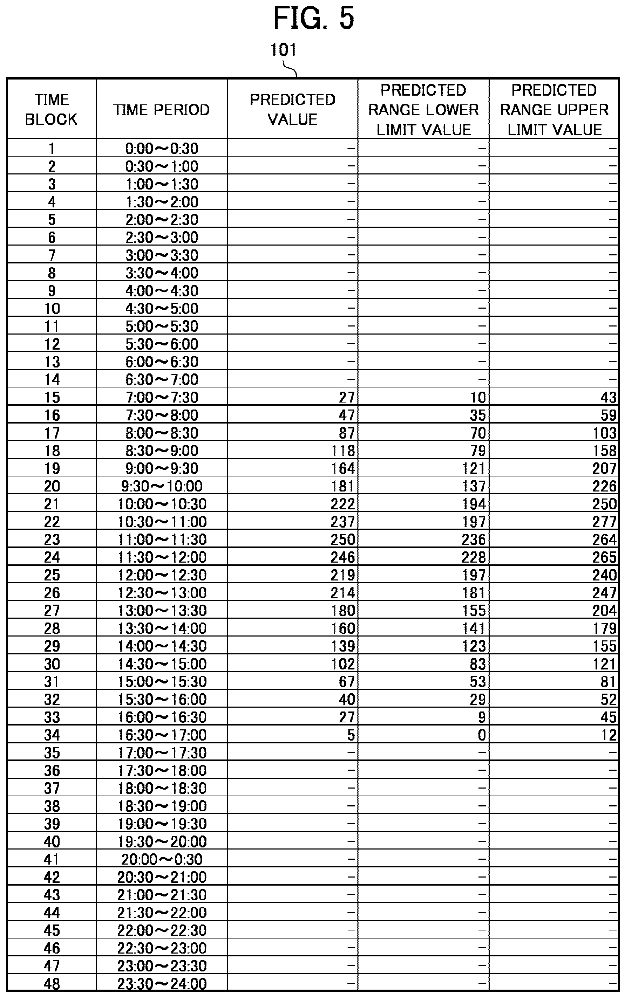

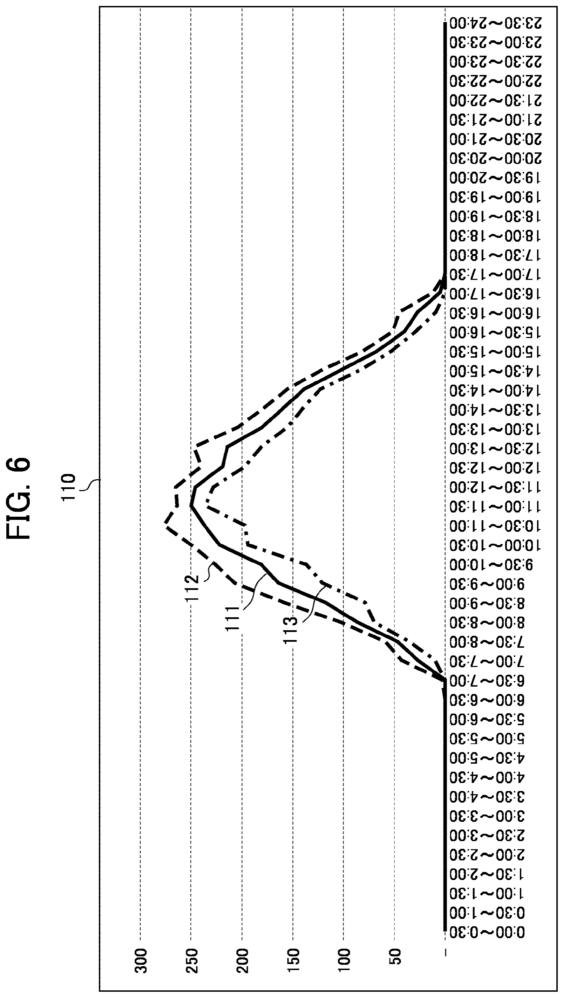

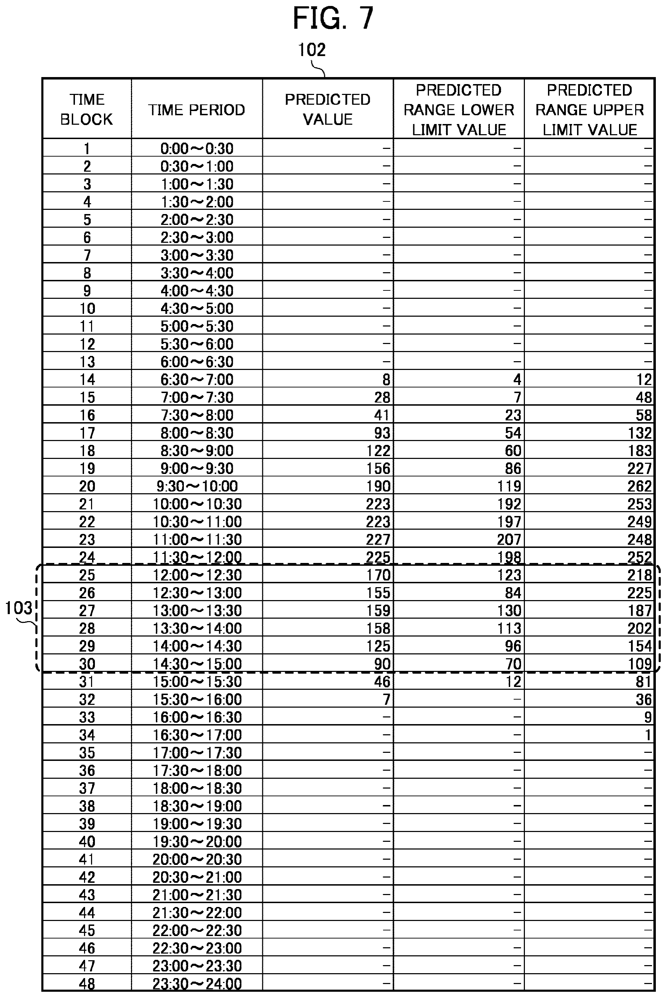

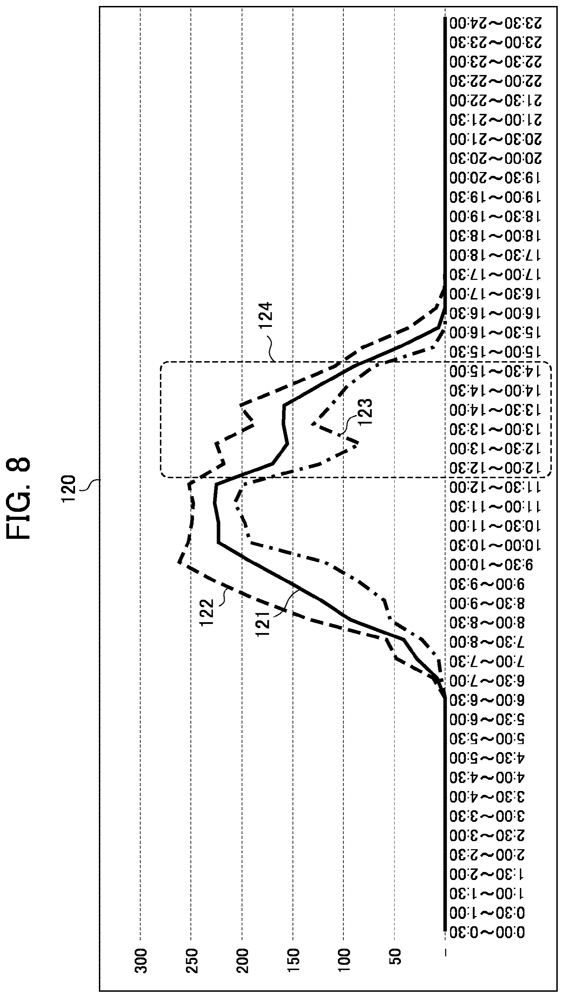

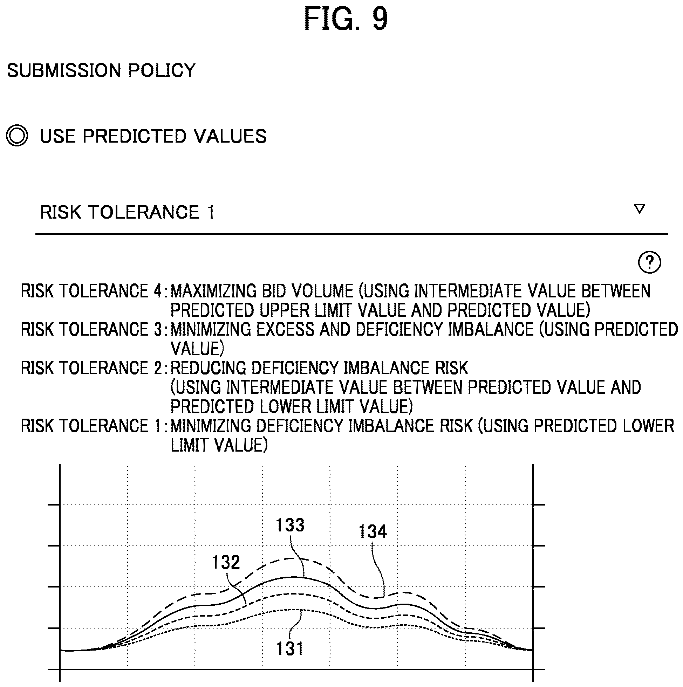

Hereinafter, with reference to FIGS. 5 to 9, the operation of the server will be specifically described according to data predicting the amount of power generated by a solar power plant. FIG. 5 shows a table of power generation amount prediction results for a certain day, which are predicted by the server of FIGS. 2 and 3 when power generated in a predetermined solar power plant is sold to a spot market. FIG. 6 is a graph showing numerical values of the table of FIG. 5 as polygonal lines. FIG. 7 is a table showing an example of power generation amount prediction results of a certain day predicted by the server of FIGS. 2 and 3 when power generated in a predetermined solar power plant is supplied on a negotiated wholesale basis. FIG. 8 is a graph showing numerical values of the table of FIG. 7 as polygonal lines. FIG. 9 shows an example of risk tolerances for determining a submission policy.

First, with reference to FIGS. 5 and 6, an example of submission of a power generation and sales plan based on power generation amount prediction results at the time of selling power to a spot market will be described.

In the present embodiment, for example, a solar power plant will be described as an example of the power generation facility. It is assumed that the power generated by the solar power plant is sold in a spot market through a grid in total. Under the current system, the deadline for bidding for power sales in the spot market is 10:00 on the day before actual demand and supply. Therefore, for example, at the time point of 6:00 on the day before the actual supply and demand, the power generation amount for 24 hours on the actual supply and demand day is predicted. Since the transaction in the spot market is bid in units of, for example, one time block of 30 minutes, the prediction target is 48 time blocks for 24 hours on the actual demand and supply day. The setting of 48 time blocks for 24 hours is an example based on the current system, and there is a possibility that the bidding deadline time or the duration of each time block is changed by a future system change.

In the server 1, when predicting the power generation amount, the error range of the power generation prediction is calculated in addition to the predicted value. The power generation prediction calculation unit 421 (AI) estimates the error range of the power generation prediction from enormous accumulated data. At this time, the power generation prediction calculation unit 421 determines the error range of the power generation prediction based on the accuracy of the own prediction learned from the enormous accumulated data. Therefore, the width of the prediction error range changes (enlarges or shrinks) depending on the time of day even on the same day. For example, the accuracy of prediction is relatively likely to decrease on cloudy days or weather-unstable days, and the error range of prediction automatically increases on days or during times of such unstable weather. For example, it is assumed that, at the time of 6 o'clock in the morning on Monday, the power generation amount of 48 time blocks for 24 hours on the next day, Tuesday, is predicted as the numerical values of the table shown in FIG. 5 and the graph of FIG. 6. In the graph 110 shown in FIG. 6, the vertical axis indicates the power generation amount, and the horizontal axis indicates time blocks in 30-minute intervals. In the graph 110, for example, a polygonal line 111 of the median value of the power generation prediction, a polygonal line 112 of the upper limit value, and a polygonal line 113 of the lower limit value are shown as the predicted power generation values.

Since it is estimated that the prediction accuracy of the next day, Tuesday, is high in view of the prediction results by the power generation prediction calculation unit 421 from the predicted power generation values of FIG. 5 and the graph of FIG. 6, the power generation and sales plan determination unit 46 decides to submit the median values of the power generation prediction (the polygonal line 111 of FIG. 6) as is as planned values as the power generation and sales plan to be submitted to a specified submission destination organization in advance for selling power.

Next, with reference to FIGS. 7 and 8, an example of submission of a power generation and sales plan based on power generation amount prediction results at the time of wholesale supply will be described.

In this example, the power generation facility is assumed to be, for example, a ground-mounted solar power plant. It is assumed that the generated power is totally wholesale supplied to retail electricity suppliers through the grid. In the case of wholesale supply to a retail electricity supplier, for convenience of coordination with the retail electricity supplier, it is assumed that a power generation amount corresponding to 24 hours on the day of the actual supply and demand is predicted at a time point of 17:00 two days prior to the actual demand and supply, and a power generation and sales plan is submitted. Since the transaction is conducted in units of one time block of 30 minutes, for example, the prediction target is 48 time blocks for 24 hours on the day of the actual supply and demand. In this case, as well, similarly to the above, since there is a possibility that the bidding deadline time or the duration of each time block is changed due to a future change in the system, the above is an example based on the current system.

When predicting the power generation amount, the power generation prediction calculation unit 421 calculates an error range of the power generation prediction in addition to the predicted value. Since the prediction error range is determined based on the accuracy of its own prediction estimated by the power generation prediction calculation unit 421 from enormous past accumulated data (the power generation amount predicted over one year and the corresponding actual power generation amount), the width of the prediction error range changes (enlarges or shrinks) depending on the time of day, even within the same day. For example, on days and times when the accuracy of prediction is relatively likely to decrease, such as on cloudy days or days with unstable weather, the prediction error range automatically widens. For example, it is assumed that at 17:00 on Tuesday evening, the power generation amount of 48 time blocks for 24 hours on Thursday, two days later, is predicted as shown in the numerical values of the table in FIG. 7 and the graph in FIG. 8.

In view of the prediction results by the power generation prediction calculation unit 421, it is estimated that the prediction accuracy of Thursday, two days later, temporarily decreases due to the influence of clouds or rain particularly from the afternoon. Therefore, the power generation and sales plan determination unit 46 decides to submit the predicted lower limit values of the predicted power generation ranges (polygonal line 123 in FIG. 8) only for six time blocks of 12:00 to 15:00, which are indicated by the broken line frame 103 in FIG. 7 and the broken line frame 124 in FIG. 8 as the power generation and sales plan to be submitted to retail electricity suppliers and a specified submission destination organization, and decides to determine and submit the median values of the predicted power generation values (polygonal line 121 in FIG. 8) as is as the planned values for the other time periods.

Next, with reference to FIGS. 7 and 9, an example of submission of a power generation and sales plan based on power generation amount prediction results when selling and wholesale supplying power to a spot market will be described.

In this example, the power generation facility is assumed to be, for example, a solar power plant on a building roof. The generated power, except for the amount of power consumed within the building, will be totally sold to the spot market and/or supplied wholesale to retail electricity suppliers through the grid. For example, it is assumed that, at 17:00 on Wednesday evening, the power generation amount of 48 time blocks for 24 hours on Friday, two days later, is predicted as shown in the numerical values of the table in FIG. 7 and the graph in FIG. 9. In addition, since the date falls on a day when stores operating in the building are closed, it is assumed that no power is consumed in the building (in fact, standby power consumption actually occurs, but it is small and is not considered here). Accordingly, it is assumed that the power generated on that Friday is totally sold to the spot market and/or supplied wholesale to retail electricity suppliers through the grid.

In view of the prediction results by the power generation prediction calculation unit 421, it is estimated that the prediction accuracy of Friday, two days later, temporarily decreases due to the influence of clouds and rain particularly from the afternoon. On the other hand, the power generation prediction calculation unit 421 predicts that the predicted price in the afternoon of the spot market on Friday, two days later, is 21 yen/kWh to 25 yen/kWh, which is higher than the average price of 12 yen/kWh on that day, and predicts that the imbalance price falls within about 7 yen/kWh to 9 yen/kWh.

Therefore, originally, it is estimated that the prediction accuracy on Friday afternoon is temporarily lowered due to the influence of clouds and rain, but in this case, the power generation and sales plan determination unit 46 decides to take a bidding policy to allow for a certain level of risk (e.g., the risk that the actual amount of power generated and sold will be deficient relative to the submitted power generation and sales plan and that a deficiency imbalance fee will be charged) based on the predicted price in the spot market and the prediction of the imbalance price.

Specifically, as shown in FIG. 9, the power generation and sales plan determination unit 46 sets risk tolerances (ways of taking a risk) with a plurality of curves 131 to 134 (risk characteristics), and determines a policy for submitting a power generation plan with any of the risk tolerances. Curve 131 shows risk tolerance 1 (the risk of loss due to deficiency imbalance may be the lowest, but the profit may be the smallest) of creating a sales plan with predicted lower limit values. Curve 132 shows risk tolerance 2 (the risk of loss due to deficiency imbalance may be second lowest, and the profit may be second smallest) of creating a sales plan with intermediate values between predicted power generation values and the predicted lower limit values. Curve 133 shows risk tolerance 3 (the risk of loss due to deficiency imbalance may be second highest, and the profit may be second largest) of creating a sales plan with the predicted power generation values. Curve 134 shows risk tolerance 4 (the risk of loss due to deficiency imbalance may be highest, but the profit may be largest) of creating a sales plan with intermediate values between predicted upper limit values and the predicted power generation values.

The power generation and sales plan determination unit 46 decides to determine and submit, as a power generation and sales plan, average values of the lower limit values (curve 131 in FIG. 9) of the predicted power generation ranges and the predicted power generation values only for six time blocks from 12:00 to 15:00, and to submit the predicted power generation values (curve 133 in FIG. 9) as planned values for the other time periods. This maximizes the final revenue calculated by subtracting imbalance costs from the revenue from electricity sales as a power generation company.

As described above, according to the server 1 of the present embodiment, by utilizing the predicted power generation range, for example, the power generation plan for the power generation facility and the bidding conditions for selling and purchasing power that maximize the profitability can be determined fully automatically. Thus, man-hours can be reduced. In addition, bidding precision can be improved. Furthermore, by displaying the predicted power generation range for determining the bidding conditions, for example, a bidding policy for maximizing profitability can be considered. Moreover, the function of displaying the predicted power generation range supports the analysis of the power generation prediction by displaying the predicted power generation range, thereby contributing to an improvement in the precision of the power generation prediction.

In the above-described embodiment, the submission policy is determined using the polygonal lines of the upper limit value, the median value, and the lower limit value shown in FIGS. 6 and 8, and the four curves 131 to 134 shown in FIG. 9, but the proposal policy is not limited thereto, and the proposal policy may be determined based on various characteristics (indexes). In the above embodiment, an example of time periods divided into 30-minute time blocks has been described, but other ways of division, such as dividing by one hour as one time block, by half-day as one time block, or by 10 minutes as one time block, are also possible.

Although one embodiment of the present invention has been described above, the present invention is not limited to the above-described embodiment, and modifications, improvements, and the like within a range in which the object of the present invention can be achieved are included in the present invention.

For example, the series of processes described above may be executed by hardware or software. In other words, the functional configuration of FIG. 3 is merely an example and is not particularly limited. That is, it is sufficient that the power generation prediction system is provided with a function capable of executing the above-described series of processes as a whole, and what kind of functional blocks are used to realize this function is not particularly limited to the example of FIG. 3. The locations of the functional blocks and databases are not particularly limited to those in FIG. 3, and may be freely selected. For example, at least some of the functional blocks and the databases necessary for executing various processes may be transferred to a user terminal or the like. Conversely, the functional blocks and databases of the user terminal may be transferred to the server or the like. In addition, one functional block may be configured by hardware alone, may be configured by software alone, or may be configured by a combination thereof.

When a series of processes are executed by software, a program constituting the software is installed in a computer or the like from a network or a recording medium. The computer may be a computer embedded in dedicated hardware. The computer may be a computer capable of executing various functions by installing various programs, for example, a server, a general-purpose smartphone, or personal computer.

The recording medium including such a program includes not only a removable medium (not shown) distributed separately from the device main body in order to provide the program to the user or the like, but also a recording medium or the like provided to the user or the like in a state of being preinstalled in the device main body.

Note that, in the present specification, the steps describing the program recorded on the recording medium include not only the processing performed in time series along the order, but also the processing performed in parallel or individually without being necessarily performed in time series. In the present specification, the term "system" means an overall device including a plurality of devices, a plurality of means, or the like.

In other words, the information processing device to which the present invention is applied only needs to have the following configurations, and can take various embodiments.
(1) That is, an information processing device (e.g., the server 1 in FIG. 3) to which the present invention is applied includes:
   a weather forecast acquisition unit (e.g., the weather forecast acquisition unit 411 in FIG. 3) that acquires weather forecast data;
   a power generation record acquisition unit (e.g., the power generation record acquisition unit 412 in FIG. 3) that acquires a power generation record of a power generation facility;
   a power generation capacity acquisition unit (e.g., the power generation capacity acquisition unit 413 in FIG. 3) that acquires a power generation capacity (e.g., performance of a solar panel) and an installation location (e.g., latitude, longitude, and altitude) of the power generation facility; a power generation prediction calculation unit (e.g., the power generation prediction calculation unit 421 in FIG. 3) that calculates a predicted power generation value and a predicted minimum power generation value for renewable energy based on at least latest weather forecast data and the power generation record, the power generation capacity, and the installation location of the power generation facility; and
   a power generation plan determination unit (e.g., the power generation plan determination unit 46 in FIG. 3, a unit to make determinations fully automatically, or a unit to assist in making determinations manually) that determines a power generation plan for the power generation facility and bidding conditions (e.g., bid time, bid price, bid volume) for selling and purchasing power based on the calculated predicted power generation value and the calculated predicted minimum power generation value. As a result, by utilizing the predicted power generation range, for example, the power generation plan for the power generation facility and the bidding conditions for selling and purchasing power that maximize profitability can be determined fully automatically. That is, man-hours can be reduced. In addition, bidding precision can be improved. Moreover, by displaying the predicted power generation range for determining the bidding conditions, for example, a bidding policy for maximizing profitability can be considered. Furthermore, the display/analysis function of the predicted power generation range can contribute to an improvement in the precision of the power generation prediction. As a result, it is possible to improve profitability in the electricity market by utilizing a predicted power generation range (e.g., a confidence interval) of a power generation facility (e.g., a solar power plant) that changes according to changes in weather.
(2) The power generation prediction calculation unit (e.g., the power generation prediction calculation unit 421 in FIG. 3) can further calculate a predicted power generation range defined by the predicted minimum power generation value and a predicted maximum power generation value. The power generation plan determination unit (e.g., the power generation plan determination unit 46 in FIG. 3) can determine the power generation plan for the power generation facility and the bidding conditions for selling and purchasing power based on the calculated predicted power generation value and the calculated predicted power generation range.
(3) The power generation plan determination unit (e.g., the power generation and sales plan determination unit 46 in FIG. 3) can determine the power generation plan for the power generation facility and the bidding conditions for selling and purchasing power based on a prediction accuracy, an imbalance fee, and a market price in addition to the predicted power generation value and the predicted minimum power generation value.
(4) When a bidding policy for determining the power generation plan for the power generation facility (e.g., timing and amount of power generation) and the bidding conditions for selling and purchasing power (e.g., price and amount of power sold or purchased, and parties to which power is to be sold or purchased) is designated by a user, the power generation plan determination unit (e.g., the power generation plan determination unit 46 in FIG. 3) can further determine the power generation plan for the power generation facility and the bidding conditions for selling and purchasing power based on the bidding policy. The designation by the user means, for example, designating "the predicted power generation value", "the upper limit value of the predicted power generation range", "the lower limit value of the predicted power generation range", or the like with a radio button (option button), or designating "the value" with a mouse.
(5) The power generation plan determination unit (e.g., the power generation and sales plan determination unit 46 in FIG. 3)
   can adopt, as the designation of the bidding policy by the user, a designation selected by the user from among a designation to be applied to a plurality of determinations (e.g., as a default policy) and a designation to be applied to an individual determination (e.g., only once), and
   can determine the power generation plan for the power generation facility and the bidding conditions for selling and purchasing power based on the bidding policy according to the designation adopted.
(6) The information processing device can further include:
   a graph generation unit (e.g., the graph generation unit 453 in FIG. 3) that generates a graph indicating temporal changes in the calculated predicted power generation value and the calculated predicted minimum power generation value; and
   a display data generation unit (e.g., the display data generation unit 455 in FIG. 3) that generates display data for displaying the generated graph.
(7) The graph generation unit (e.g., the graph generation unit 453 in FIG. 3) can generate a continuous curve indicating a temporal change in at least one of the predicted power generation value, the predicted maximum power generation value, the predicted minimum power generation value, or a power generation record value.
(8) The graph generation unit (e.g., the graph generation unit 453 in FIG. 3) can include:
   a graph selection unit (e.g., the graph selection unit 61 in FIG. 3) that receives selection of a step shape, a continuous line shape, or scatter shape as a locus of the graph; and
   a time unit change unit (e.g., the time block change unit 62 in FIG. 3) that changes a time unit (e.g., 30 minutes) indicating the temporal changes in the graph according to a predetermined bid unit.
(9) The power generation plan determination unit (e.g., the power generation and sales plan determination unit 46 in FIG. 3) can further determine the power generation plan for the power generation facility and the bidding conditions for selling and purchasing power based on a set power generation amount. The power generation plan determination unit can further include a power generation amount setting unit (e.g., the power generation amount setting unit 71 in FIG. 3) that sets, when a position of the displayed graph is designated (e.g., clicked with a mouse), the set power generation amount based on the position.
(10) The information processing device can further include:
   an association unit (e.g., the association unit 454 in FIG. 3) that associates a unit time (e.g., one time block from 10:00 to 11:30) in which the predicted power generation value and the predicted minimum power generation value are calculated with the calculated predicted power generation value and the calculated predicted minimum power generation value;
   a display range designation unit (e.g., the display range designation unit 451 in FIG. 3) that designates a display range of the graph by one or more of the unit times (e.g., two time blocks from 10:00 to 12:00); and
   a graph display portion specification unit (e.g., the graph display portion specification unit 452 in FIG. 3) that specifies, as a graph display portion, a portion of the graph including the predicted power generation value and the predicted minimum power generation value associated with each of the designated one or more unit times. The display data generation unit (e.g., the display data generation unit 455 in FIG. 3) can generate data for displaying the graph display portion as the display data.
(11) The display range designation unit (e.g., the display range designation unit 451 in FIG. 3) can receive an operation for changing the display range of the graph (e.g., a slide operation of a slide bar for making the calculation date and time variable). The graph display portion specification unit (e.g., the graph display portion specification unit 452 in FIG. 3) can change the graph display portion in conjunction with the operation for changing the display range of the graph. The display data generation unit (e.g., the display data generation unit 455 in FIG. 3) can generate data for displaying the changed graph display portion as the display data.
(12) The information processing device can further include a specific date and time designation unit (e.g., the specific date and time designation unit 51 in FIG. 3) that designates a specific date and time or a specific prediction interval. The display data generation unit (e.g., the display data generation unit 455 in FIG. 3) can generate display data for displaying at least one of the predicted power generation value, the predicted minimum power generation value, or a power generation record value in the designated specific date and time or the designated specific prediction interval so as to be superimposed on the graph.
(13) The graph generation unit (e.g., the graph generation unit 453 in FIG. 3) can generate a graph indicating a temporal change in the power generation record value, in addition to temporal changes in the predicted power generation value and the predicted minimum power generation value.
(14) The weather forecast acquisition unit (e.g., the weather forecast acquisition unit 411 in FIG. 3)
   can acquire the latest weather forecast data based on at least a bidding deadline (e.g., a gate close (one hour before the actual demand and supply) in the case of an hour-ahead market) or a bidding start time (e.g., 17:00 on the previous day in the case of the hour-ahead market) of a power transaction and a time required to determine the bidding conditions for selling and purchasing power.
(15) The information processing device can further include:
   a setting unit (e.g., the setting unit 47 in FIG. 3) that sets prediction accuracy of power generation; and
   a calculation unit (e.g., the power generation prediction calculation unit 421 in FIG. 3) that calculates the predicted minimum power generation value based on the set prediction accuracy.
(16) The information processing device can further include:
   a comparison unit (e.g., the comparison unit 43 in FIG. 3) that compares the predicted power generation value with the power generation record; and
   an abnormality determination unit (e.g., the abnormality determination unit 44 in FIG. 3) that determines whether or not there is an abnormality in the power generation facility based on a comparison result of the comparison unit.
(17) An information processing method to which the present invention is applied is as follows. An information processing method executed by an information processing device, the information processing method can include:
   acquiring weather forecast data (e.g., step S1 in FIG. 4);
   acquiring a power generation record of a power generation facility (e.g., step S2 in FIG. 4);
   acquiring a power generation capacity and an installation location of the power generation facility (e.g., step S3 in FIG. 4);
   calculating a predicted power generation value and a predicted minimum power generation value for renewable energy based on at least latest weather forecast data and the power generation record, the power generation capacity, and the installation location of the power generation facility (e.g., step S4 in FIG. 4); and
   determining a power generation plan for the power generation facility and bidding conditions for selling and purchasing power based on the calculated predicted power generation value and the calculated predicted minimum power generation value (e.g., step S5 in FIG. 4).
(18) A program to which the present invention is applied can cause a computer to execute control processing including:
   acquiring weather forecast data (e.g., step S1 in FIG. 4);
   acquiring a power generation record of a power generation facility (e.g., step S2 in FIG. 4);
   acquiring a power generation capacity and an installation location of the power generation facility (e.g., step S3 in FIG. 4);
   calculating a predicted power generation value and a predicted minimum power generation value for renewable energy based on at least latest weather forecast data and the power generation record, the power generation capacity, and the installation location of the power generation facility (e.g., step S4 in FIG. 4); and
   determining a power generation plan for the power generation facility and bidding conditions for selling and purchasing power based on the calculated predicted power generation value and the calculated predicted minimum power generation value (e.g., step S5 in FIG. 4).

### EXPLANATION OF REFERENCE NUMERALS

1: server, 2: user terminal, 3: electricity market server, 11: CPU, 12: ROM, 13: RAM, 14: bus, 15: input/output interface, 16: input unit, 17: output unit, 18: storage unit, 19: communication unit 20: drive, 21: removable medium, 41: acquisition unit 42: calculation unit 43: comparison unit, 44: abnormality determination unit, 45: display control unit, 46: power generation and sales plan determination unit, 47: setting unit, 51: specific date and time designation unit, 61: graph selection unit, 62: time block change unit, 71: power generation amount setting unit, 91: weather forecast DB, 92: power generation record DB, 93: power plant information DB, 94: power generation prediction DB, 95: transaction data DB, 96: user information DB, 411: weather forecast acquisition unit, 412: power generation record acquisition unit, 413: power generation capacity acquisition unit, 421: power generation prediction calculation unit, 451: display range designation unit, 452: graph display portion specification unit, 453: graph generation unit 454: association unit, 455: display data generation unit, S: administrator, NW: network, U: user

## Claims

1. An information processing device comprising:
a weather forecast acquisition unit that acquires weather forecast data;
a power generation record acquisition unit that acquires a power generation record of a power generation facility;
a power generation capacity acquisition unit that acquires a power generation capacity and an installation location of the power generation facility;
a power generation prediction calculation unit that calculates a predicted power generation value and a predicted minimum power generation value for renewable energy based on at least latest weather forecast data and the power generation record, the power generation capacity, and the installation location of the power generation facility; and
a power generation plan determination unit that determines a power generation plan for the power generation facility and bidding conditions for selling and purchasing power based on the calculated predicted power generation value and the calculated predicted minimum power generation value.

2. The information processing device according to claim 1.
wherein the power generation prediction calculation unit further calculates a predicted power generation range defined by the predicted minimum power generation value and a predicted maximum power generation value, and
wherein the power generation plan determination unit determines the power generation plan for the power generation facility and the bidding conditions for selling and purchasing power based on the calculated predicted power generation value and the calculated predicted power generation range.

3. The information processing device according to claim 1, wherein the power generation plan determination unit determines the power generation plan for the power generation facility and the bidding conditions for selling and purchasing power based on a prediction accuracy, an imbalance fee, and a market price in addition to the predicted power generation value and the predicted minimum power generation value.

4. The information processing device according to claim 1, wherein when a bidding policy for determining the power generation plan for the power generation facility and the bidding conditions for selling and purchasing power is designated by a user, the power generation plan determination unit further determines the power generation plan for the power generation facility and the bidding conditions for selling and purchasing power based on the bidding policy.

5. The information processing device according to claim 4,
wherein the power generation plan determination unit adopts, as the designation of the bidding policy by the user, a designation selected by the user from among a designation to be applied to a plurality of determinations and a designation to be applied to an individual determination, and
determines the power generation plan for the power generation facility and the bidding conditions for selling and purchasing power based on the bidding policy according to the designation adopted.

6. The information processing device according to claim 2, further comprising:
a graph generation unit that generates a graph indicating temporal changes in the calculated predicted power generation value and the calculated predicted minimum power generation value; and
a display data generation unit that generates display data for displaying the generated graph.

7. The information processing device according to claim 6, wherein the graph generation unit generates a continuous curve indicating a temporal change in at least one of the predicted power generation value, the predicted maximum power generation value, the predicted minimum power generation value, or a power generation record value.

8. The information processing device according to claim 6,
wherein the graph generation unit comprises:
a graph selection unit that receives selection of a step shape, a continuous line shape, or scatter shape as a locus of the graph; and
a time unit change unit that changes a time unit indicating the temporal changes in the graph according to a predetermined bid unit.

9. The information processing device according to claim 6,
wherein the power generation plan determination unit further determines the power generation plan for the power generation facility and the bidding conditions for selling and purchasing power based on a set power generation amount, and
wherein the power generation plan determination unit further comprises a power generation amount setting unit that sets, when a position of the displayed graph is designated, the set power generation amount based on the position.

10. The information processing device according to claim 6, further comprising:
an association unit that associates a unit time in which the predicted power generation value and the predicted minimum power generation value are calculated with the calculated predicted power generation value and the calculated predicted minimum power generation value;
a display range designation unit that designates a display range of the graph by one or more of the unit times; and
a graph display portion specification unit that specifies, as a graph display portion, a portion of the graph including the predicted power generation value and the predicted minimum power generation value associated with each of the designated one or more unit times,
wherein the display data generation unit generates data for displaying the graph display portion as the display data.

11. The information processing device according to claim 10,
wherein the display range designation unit receives an operation for changing the display range of the graph,
wherein the graph display portion specification unit changes the graph display portion in conjunction with the operation for changing the display range of the graph, and
wherein the display data generation unit generates data for displaying the changed graph display portion as the display data.

12. The information processing device according to claim 6, further comprising
a specific date and time designation unit that designates a specific date and time or a specific prediction interval,
wherein the display data generation unit generates display data for displaying at least one of the predicted power generation value, the predicted minimum power generation value, or a power generation record value in the designated specific date and time or the designated specific prediction interval so as to be superimposed on the graph.

13. The information processing device according to claim 7, wherein the graph generation unit generates a graph indicating a temporal change in the power generation record value, in addition to temporal changes in the predicted power generation value and the predicted minimum power generation value.

14. The information processing device according to claim 1,
wherein the weather forecast acquisition unit acquires the latest weather forecast data based on at least a bidding deadline or a bidding start time of a power transaction and a time required to determine the bidding conditions for selling and purchasing power.

15. The information processing device according to claim 1, further comprising:
a setting unit that sets prediction accuracy of power generation; and
a calculation unit that calculates the predicted minimum power generation value based on the set prediction accuracy.

16. The information processing device according to claim 1, further comprising:
a comparison unit that compares the predicted power generation value with the power generation record; and
an abnormality determination unit that determines whether or not there is an abnormality in the power generation facility based on a comparison result of the comparison unit.

17. An information processing method executed by an information processing device, the information processing method comprising:
acquiring weather forecast data;
acquiring a power generation record of a power generation facility;
acquiring a power generation capacity and an installation location of the power generation facility;
calculating a predicted power generation value and a predicted minimum power generation value for renewable energy based on at least latest weather forecast data and the power generation record, the power generation capacity, and the installation location of the power generation facility; and
determining a power generation plan for the power generation facility and bidding conditions for selling and purchasing power based on the calculated predicted power generation value and the calculated predicted minimum power generation value.

18. A program for causing a computer to execute control processing comprising:
acquiring weather forecast data;
acquiring a power generation record of a power generation facility;
acquiring a power generation capacity and an installation location of the power generation facility;
calculating a predicted power generation value and a predicted minimum power generation value for renewable energy based on at least latest weather forecast data and the power generation record, the power generation capacity, and the installation location of the power generation facility; and
determining a power generation plan for the power generation facility and bidding conditions for selling and purchasing power based on the calculated predicted power generation value and the calculated predicted minimum power generation value.
